# EUROPEAN PATENT APPLICATION

(11) **EP 2 330 338 A1**
(43) Date of publication of application: **08.06.2011**
(21) Application number: 09817558.1
(22) Date of filing: 19.06.2009
(51) Int. Cl.: F21S 2/00, F21V 29/00, G02B 6/00, G02F 1/13357, F21Y 101/02

(54) **ILLUMINATING DEVICE, DISPLAY DEVICE AND TELEVISION RECEIVER**

(30) Priority: 30.09.2008 JP 2008254953
(71) Applicant: Sharp Kabushiki Kaisha, Osaka-shi, Osaka 545-8522 (JP)
(72) Inventor: SHIMIZU Takaharu, OSAKA 545-8522 (JP)
(74) Representative: Müller-Boré & Partner Patentanwälte
(86) International application number: PCT/JP2009/061192
(87) International publication number: WO 2010/038520

(57) **Abstract**

A backlight unit 12 includes light guide members 18. Each light guide member 18 is configured such that a maximum amount of light exits an area of a light exit portion 31 located more to the front end than the middle of an area between an end of the light exit portion located adjacent to a light guide portion 32 and the front end of the light exit portion 31 when a distribution of the amount of outgoing light is measured. With this configuration, a uniformity of in-plane brightness can be further improved.

## Description

### TECHNICAL FIELD

The present invention relates to a lighting device, a display device and a television receiver.

### BACKGROUND ART

In recent years, displays of image display devices including television receivers are shifting from conventional cathode-ray tube displays to thin-screen displays including liquid crystal panels and plasma display panels. With the thin-screen displays, thin image display devices can be provided. A liquid crystal display device requires a backlight unit as a separate lighting device because a liquid crystal panel used therein is not a light-emitting component. Such a backlight unit is also needed to be thinner. For example, a lighting unit disclosed in Patent Document 1 is used in the liquid crystal display device.
Patent Document 1: Japanese Published Patent Application No. 2001-93321

### Problem to be Solved by the Invention

The lighting device disclosed in Patent Document 1 includes a plurality of light guide members and a plurality of light sources. Each light guide member includes a pair of transparent plates having opposed end portions in different thicknesses. The end portions having a larger thickness and the respective end portions having a smaller thickness are optically connected in a seamless manner. Each light source is arranged on the rear surface of the adjacent light guide member at a location close to the end portion having the large thickness. The lighting device further includes an optical member configured to guide light emitted from the light sources to the end surfaces of the light guide members. Therefore, the lighting device can be configured for a large-screen display device. With the above configuration, a lighting device that is small in small thickness and light in weight with high brightness and high uniformity in in-plane brightness is provided. With this lighting device, a bright and low-power consumption display device that is small in thickness and light in weight is provided in large-screen size.

To achieve uniformity in overall brightness of the backlight unit, light that exits the light exit portion of the light guide member is preferably to be uniform in the plane. When planar light is produced using multiple light guide members as in Patent Document 1, each light guide member need to be precisely designed in consideration of light that leaks from the adjacent light guide member.

### DISCLOSURE OF THE PRESENT INVENTION

The present invention was made in view of the foregoing circumstances. An object of the present invention is to provide a lighting device having improved in-plane brightness uniformity, a display device including the lighting device and a television receiver including the display device.

### Problem to be Solved by the Invention

To solve the above problem, a lighting device of the present invention includes a plurality of light sources and a plurality of light guide members. Each light guide member includes a light exit portion through which light from the corresponding light source exits and a light guide portion configured to guide the light from the light source to the light exit portion. The light sources include a first light source and a second light source. The light guide members include a first light guide member and a second light guide member. The first light guide member includes a first light exit portion through which light from the first light source exits and the first light guide portion configured to guide the light from the first light source to the first light exit portion. The second light guide member includes a second light exit portion through which light from the second light source exits and the second light guide portion configured to guide the light from the second light source to the second light exit portion. The second light exit portion of the second light guide member is arranged over the first light guide portion of the first light guide member such that the first light exit portion of the first light guide member and the second light exit portion of the second light guide member are arranged adjacent to each other in a plane. Each light guide member is configured such that a maximum amount of light exits an area of the light exit portion located more to a front end than a middle of an area between an end of the light exit portion located adjacent to the light guide portion and the front end of the light exit portion.

The lighting device includes the light sources and the light guide members in pairs. In such a lighting device, the first light exit portion of the first light guide member and the second light exit portion of the second light guide member are arranged adjacent to each other in the plane. To achieve in-plane brightness uniformity, a brightness distribution is preferably uniform in each light exit portion. According to the present invention, the second light exit portion of the second light guide member is arranged over the first light exit portion of the first light guide member. Therefore, the first light exit portion of the first light guide member and the second light exit portion of the second light guide member are arranged adjacent to each other in the plane. In this case, light leaks from the second light exit portion that is arranged over the first light guide portion toward the light first light exit portion. Therefore, the distribution of the amount of outgoing light needs to be controlled in consideration of the leak light. One of the causes of the leak light is that a large or small area of the surface from which light exits is formed at the front end area of the second light exit portion. Furthermore, light leaks through a gap between the first light guide portion and the second light exit portion even when the second light exit portion is arranged over the first light guide portion. Still furthermore, light leaks from (the light exit surface of) the front end portion of the second light guide member when the light guide member is configured such that the maximum amount of light from an area of the light exit portion located in the middle of the light exit portion. Therefore, each light guide member is designed so as to have the following outgoing light characteristics. The maximum amount of light exits an area of a light exit portion located more to the front end than the middle of an area between an end of the light exit portion located adjacent to a light guide portion and the front end of the light exit portion when a distribution of the amount of outgoing light is measured. With this configuration, the leak light from the second light exit portion enters the first light exit portion. In combination of optical characteristics of the first light exit portion for the outgoing light with the leak current from the second light exit portion, a uniformity of in-plane brightness can be achieved. The light guide members are designed such that the maximum amount of light exits an area of the first light exit portion located closer to the front end than the second light exit portion (the first light guide portion side). Namely, leak light from the second light exit portion side (the first light guide portion side) is added to the incident light of the first light guide member. Therefore, overall brightness of the first light exit portion is uniform.

When the distribution of the outgoing light amount from the light exit portion of each light guide member is measured, the measurement shows that the maximum amount of light exits the area between the end of the light exit portion located adjacent to the light guide portion and the front end of the light exit portion. The amount of outgoing light varies in a parabolic manner. The amount of outgoing light is small on the light guide portion side and gradually increases to the maximum amount. The amount of outgoing then gradually decreases from the maximum amount to the small amount on the front-end side. In another aspect of the present invention, the maximum amount of outgoing light is measured in the area more to the font-end side of the light exit portion than the middle area of the area between an end of the light exit portion located adjacent to the light guide portion and the front end of the light exit portion.

In the above lighting device, each light guide member has a light scattering portion configured to scatter light. The light scattering portion is formed on a surface opposite from a light exit surface of the light exit portion. The light scattering portion is a factor used to determine a distribution of the amount of outgoing light from the light exit portion.
The light scattering portion formed on the surface opposite from the light exit surface of the light exit portion may be configured such that a degree of light scattering is different in areas to achieve different distributions of the outgoing light from the light exit portion. The distribution of outgoing light from the light exit portion may be determined according to the light scattering portion, specifically, to the degree of the light scattering based on formation of the light scattering portion. With the distribution of outgoing light determined in such a manner, a preferred lighting device having the above configuration can be provided.

The light scattering portion is configured such that a degree of light scattering in the light exit portion is lower on a light guide portion side than on a front-end side and gradually increases.
By configuring the light scattering portion such that the degree of light scattering in the light exit portion is lower on the light guide portion side than on the front-end side and gradually increases, at least light from the light sources can be guided toward the front-end of the light exit portion.

The light scattering portion includes light exit elements formed in a surface of the light exit portion opposite from the light exit surface. The density of the light exit elements in the light exit portion is lower on a light guide portion side than the front-end side and gradually increases.
With such a configuration in which the density of the light exit elements in the light exit portion is lower on a light guide portion side than the front-end side and gradually increases, the degree of light scattering can be set lower on the light guide portion side than the front-end side of the light exit portion and so as to gradually increase.

The light exit portion of each light guide member has a light exit surface at an end surface opposite from the light guide portion.
When the light exit surface is formed at an end surface opposite from the light guide portion, light leaks from the light exit surface to the light exit portion of the adjacent light guide member. Therefore, it is preferable to use the configuration of the present invention.

The light sources and the light guide members form secondary light sources. The secondary light sources are two-dimensionally arranged in a plane. As a result, planar light is provided. Therefore, the lighting device can be preferably used as a backlight unit in a display device (i.e., a lighting device for a display device).

Each light source includes a plurality of unit light sources configured to emit light in different colors. Each light source is configured to produce white light by mixing the different colors of light emitted from the unit light sources. The light sources may be light emitting diodes. The present invention can be preferably used for such light sources. Especially when point light sources such as light emitting diodes are used, the uniform in-plane brightness distribution can be preferably achieved according to the present invention.

Next, to solve the problem mentioned earlier, a display device of the present invention includes the above lighting device and a display panel configured to provide display using light from the lighting device. An example of the display panel is a liquid crystal panel including a pair of substrates with liquid crystal sealed therebetween. Moreover, a television receiver including such a display device can be provided.
The uniformity of the in-plane brightness distribution of the display device and the television receiver is improved while the thicknesses thereof are reduced.

### Effect of the Invention

According to the present invention, a lighting device having improved in-plane brightness uniformity, a display device including the lighting device, and a television receiver including the display device can be provided.

### BRIEF DESCRIPTION OF THE DRAWINGS

[FIG. 1] is an exploded perspective view illustrating a general construction of a television receiver according to an embodiment;
[FIG. 2] is an exploded perspective view illustrating a general construction of a liquid crystal display panel and a backlight unit;
[FIG. 3] is a plan view of the backlight unit;
[FIG. 4] is a cross-sectional view of a liquid crystal display device along the long-side direction thereof;
[FIG. 5] is a magnified cross-sectional view illustrating an end portion of the liquid crystal display in FIG. 4;
[FIG. 6] is a magnified cross-sectional view of a light guide plate illustrated in FIG. 5;
[FIG. 7] is a magnified cross-sectional view of a lower end portion of the liquid crystal display device in FIG. 3 along the short side direction thereof;
[FIG. 8] is a magnified cross-sectional view of an upper end portion of the liquid crystal display device in FIG. 3 along the short side direction thereof;
[FIG. 9] is a magnified cross-sectional view of a middle portion of the liquid crystal display device in FIG. 3 along the short side direction thereof;
[FIG. 10] is a magnified cross-sectional view of a light guide plate illustrated in FIG. 9;
[FIG. 11] is a plan view illustrating an arrangement of light guide plates;
[FIG. 12] is a plan view of the light guide plate;
[FIG. 13] is a bottom view of the light guide plate;
[FIG. 14] is a cross-sectional view illustrating a parallel arrangement of the light guide plates;
[FIG. 15] is a graph illustrating a distribution of an outgoing light from a light exit area of the light guide plate; and [FIG. 16] is a graph illustrating a density distribution of perforations in a scattered surface of the light guide plate.

### Explanation of Symbols

10: Liquid crystal display device (Display device);
11: Liquid crystal panel (Display panel);
12: Backlight unit (Lighting device);
16: LED (Light source, light emitting diode);
16n: First light source;
16m: Second light source;
17: LED board (Circuit board);
18: Light guide plate (Light guide member);
18n: First guide plate (First light guide member);
18m: Second guide plate (Second light guide member);
24: Reflection sheet;
30: Board mounting portion;
31: Light exit portion;
31n: First light exit portion;
31m: Second light exit portion;
32: Light guide portion;
32n: First light guide portion;
32m: Second light guide portion;
36: Light exit surface;
37: Scattering surface (Light scattering portion);
37a: Perforation;
TV: Television receiver;
TP: Tapered surface (Light exit surface);
YA: Light exit area; and
200: Unit light emitter (Secondary light source)

### BEST MODE FOR CARRYING OUT THE INVENTION

An embodiment of the present invention will be explained with reference to figures. In this embodiment, a television receiver including a liquid crystal display device 10 will be explained. X-axes, Y-axes and Z-axes in the figures correspond each other so as to indicate the respective directions.

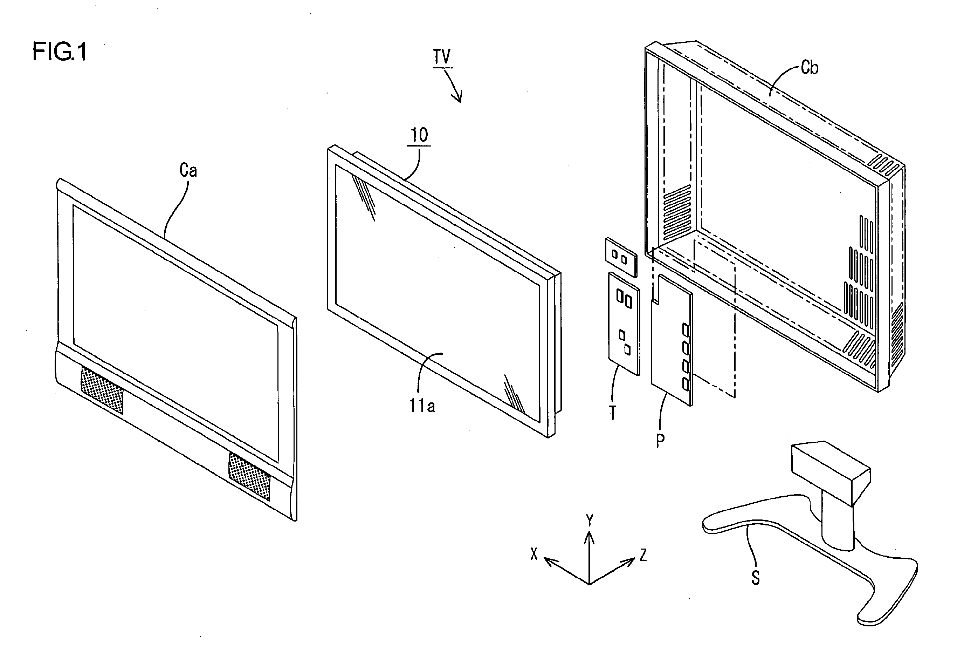

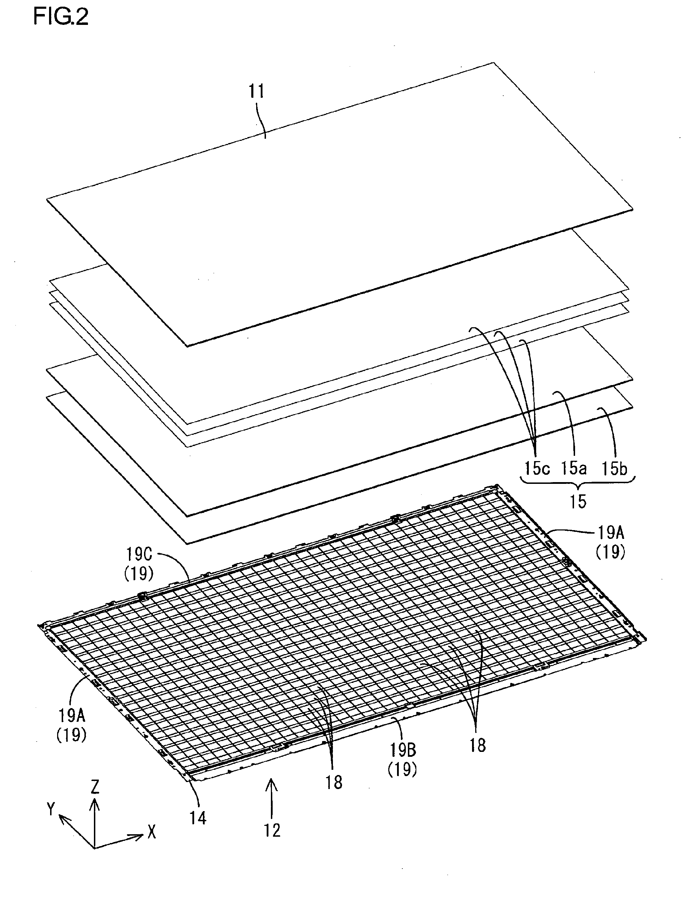

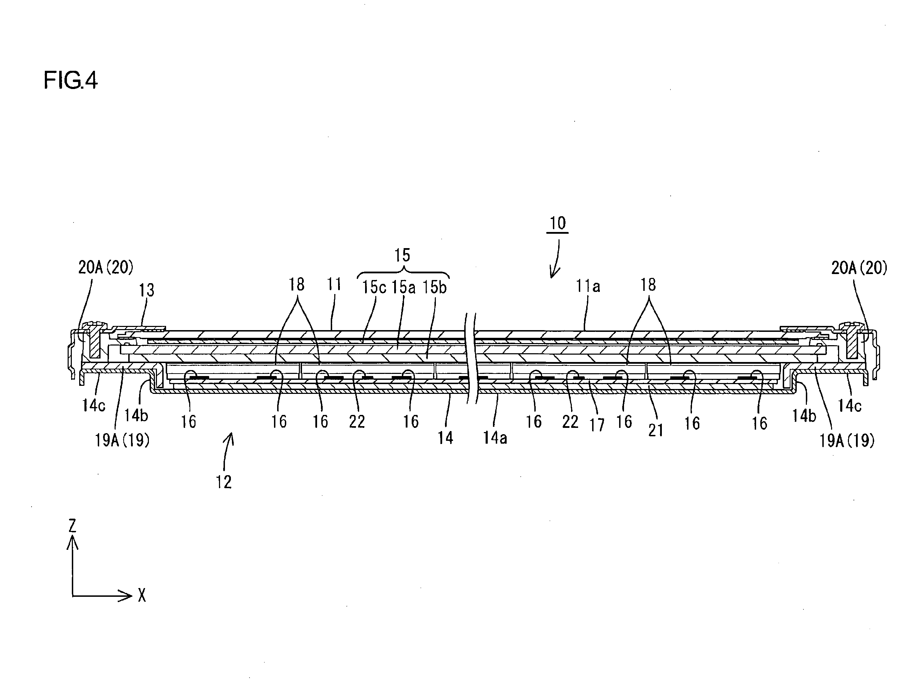

As illustrated in FIG. 1, the television receiver TV includes the liquid crystal display device 10 (a display device), cabinets Ca and Cb, a power source P, and a tuner T. The cabinets Ca and Cb sandwich the liquid crystal display device 10 therebetween from the front and the rear. The liquid crystal display device 10 is housed in the cabinets Ca and Cb. The liquid crystal display device 10 is held by a stand S in a vertical position in which a display surface 11a is set along a substantially vertical direction (the Y-axis direction). The liquid crystal display device 10 has a landscape rectangular overall shape. As illustrated in FIG. 2, the liquid crystal display device 10 includes a liquid crystal panel 11, which a display panel, and a backlight unit 12 (a lighting device), which is an external light source. The liquid crystal panel 11 and the backlight unit 12 are held together by a frame-shaped bezel 13 as illustrated in FIG. 4.

"The display surface 11a is set along the vertical direction" is not limited to a condition that the display surface 11a is set parallel to the vertical direction. The display surface 11a may be set along a direction closer to the vertical direction than the horizontal direction. For example, the display surface 11a may be 0° to 45° slanted to the vertical direction, preferably 0° to 30° slanted.

Next, the liquid crystal panel 11 and the backlight unit 12 included in the liquid crystal display device 10 will be explained. The liquid crystal panel (a display panel) 11 has a rectangular plan view and includes a pair of transparent glass substrates bonded together with a predetermined gap therebetween and liquid crystals sealed between the substrates. On one of the glass substrates, switching components (e.g., TFTs), pixel electrodes and an alignment film are arranged. The switching components are connected to gate lines and the source lines that are perpendicular to each other. The pixel electrodes are connected to the switching components. On the other glass substrate, color filters including R (red) G (green) B (blue) color sections in predetermined arrangement, a counter electrode and an alignment film are arranged. Polarizing plates are arranged on outer surfaces of the glass substrates, respectively.

Next, the backlight unit 12 will be explained in detail. As illustrated in FIG. 4, the backlight unit 12 includes a chassis 14, an optical member 15, LEDs 16 (light emitting diodes), LED boards 17 and light guide plates 18. The chassis 14 has a box-like overall shape and an opening on the liquid crystal panel 11 side (on the light exiting side). The optical member 15 is arranged so as to cover the opening. The LEDs 16 are light sources arranged inside the chassis 14. The LEDs 16 are mounted on the LED boards 17. Light emitted from the LEDs 16 is directed to the optical member 15 by the light guide plates 18. The backlight unit 12 further includes the first holding member 19, the second holding member 20 and heat sinks 21. The first holding member 19 holds diffusers 15a and 15b included in the optical member 15 from the chassis 14 side. The second holding member 20 holds the diffusers 15a and 15b from the liquid crystal panel 11 side. The heat sinks 21 are provided for dissipation of heat generated during lighting of the LEDs 16.

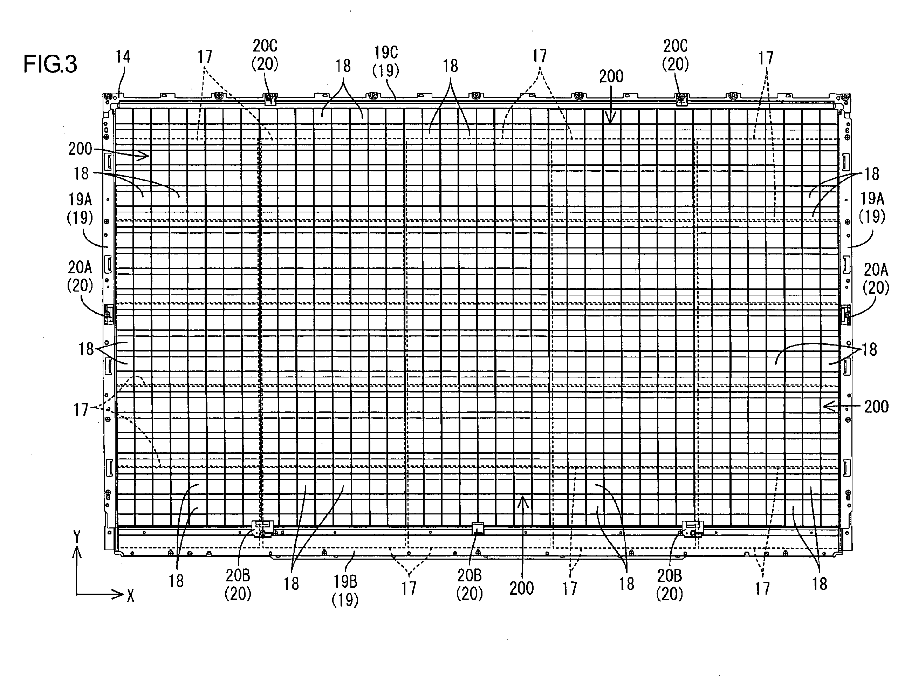

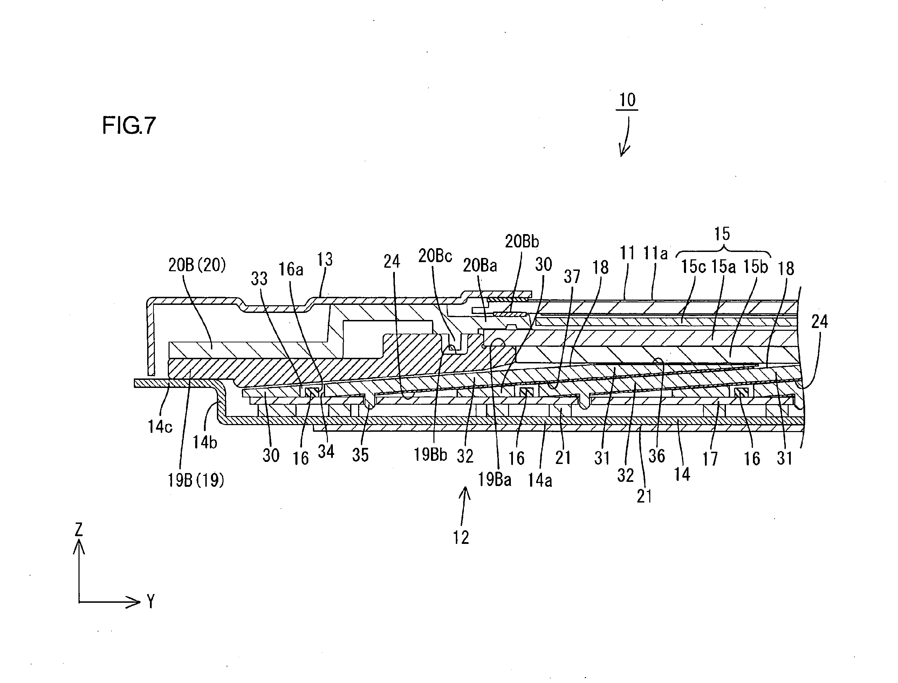

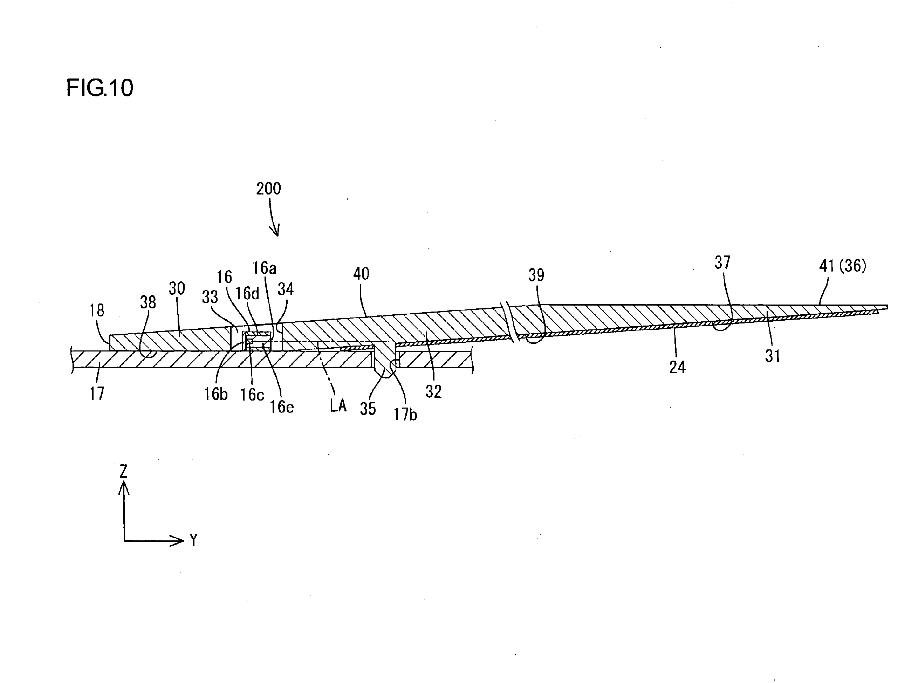

The backlight unit 12 includes the LEDs (point light sources) 16 that function as primary light sources and the light guide plates 18 that convert point light to planar light. The LEDs 16 and the light guide plates 18 function together as secondary light sources. As illustrated in FIG. 10, each unit light emitter (the secondary light source) 200 is constructed of the LED (the primary light source) 16 and the light guide plate 18. The LEDs are arranged in the Y-axis direction such that they are parallel to each other. A number of the unit light emitters 200 (twenty of them in FIG. 3) are arranged in the Y-axis direction such that they are parallel to each other in a so-called tandem arrangement (see FIGS. 7 to 9). Furthermore, the backlight unit 12 includes a number of the unit light emitters 200 (forty of them in FIG. 3) arranged parallel to each other in a direction substantially perpendicular to the tandem arrangement direction (the Y-axis direction) and along the display surface 11a (the X-axis direction). Namely, a number of the unit light emitters 200 are arranged on a plane along the display surface 11a (the X-Y plane), that is, two-dimensionally arranged parallel to each other (see FIG. 3).

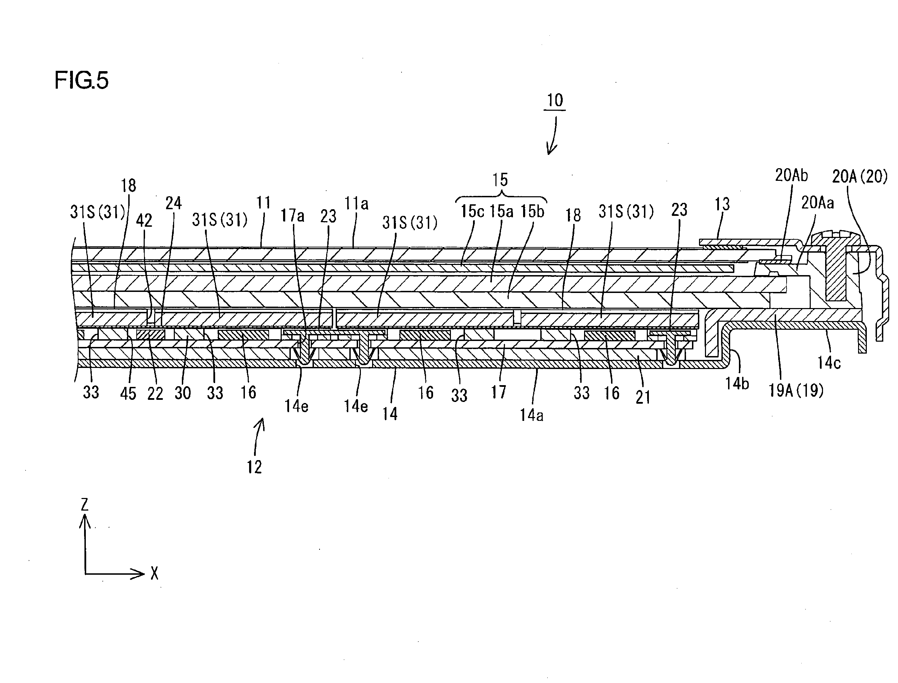

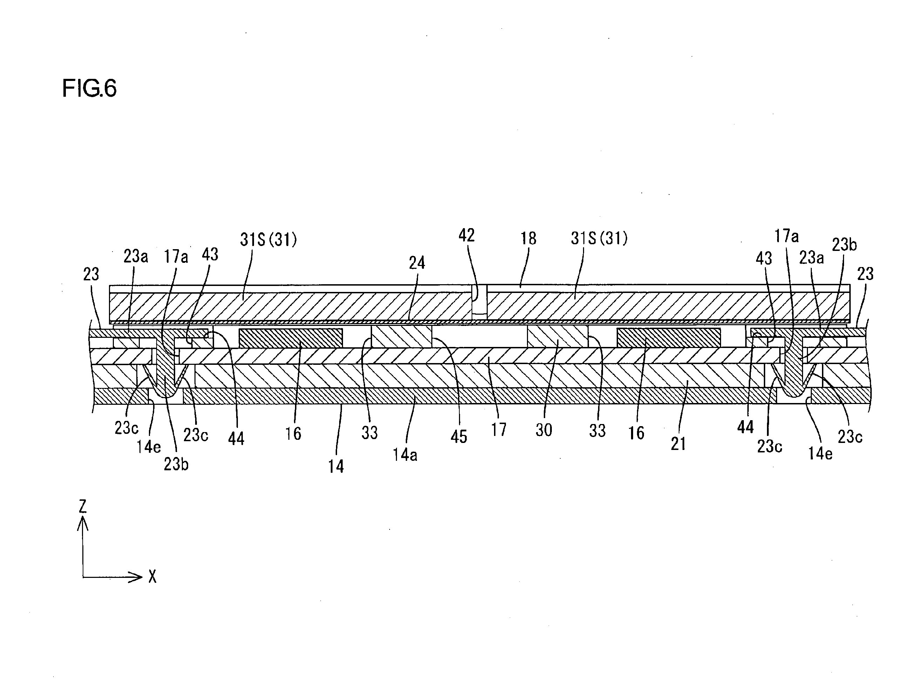

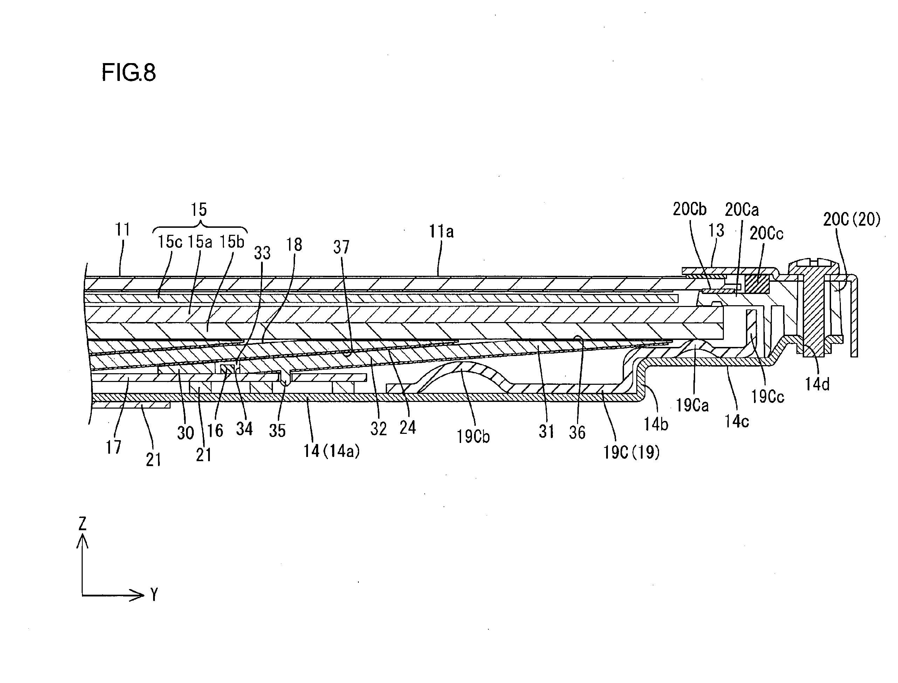

Next, components of the backlight unit 12 will be explained in detail. The chassis 14 is made of metal and has a shallow-box-like overall shape (or a shallow-bowl-like overall shape) with the opening on the liquid panel 11 side as illustrated in FIG. 4. The chassis 14 includes a bottom plate 14a, side plates 14b and support plates 14c. The bottom plate 14a has a rectangular shape similar to the liquid crystal panel 11. The side plates 14b rise from the respective edges of the bottom plate 14a. The support plates 14c project outward from the respective end edges of the side plates 14b. The long-side direction and the short-side direction of the chassis 14 correspond the horizontal direction (the X-axis direction) and the vertical direction (the Y-axis direction), respectively. The support plates 14c of the chassis 14 are configured such that the first holding member 19 and the second holding member 20 are placed thereon, respectively, from the liquid crystal panel 11 side. Each support plate 14c has mounting holes 14d that are through holes for holding the bezel 13, the first holding member 19 and the second holding member 20 together with screws and formed at predetermined positions (see FIG. 8). An outer edge portion of each support plate 14c on the long side is folded so as to be parallel to the corresponding side plate 14b (see FIG. 4). The bottom plate 14a has insertion holes 14e that are through holes for inserting clips 23 therein (see FIGS. 5 and 6). The light guide plates 18 are mounted to the chassis with the clips 23. The bottom plate 14a also has mounting holes (not shown). The mounting holes are through holes for mounting the LED boards 17 with screws and formed at predetermined positions.

As illustrated in FIG. 4, the optical member 15 is arranged between the liquid crystal panel 11 and the light guide plates 18. It includes the diffusers 15a and 15b arranged on the light guide plate 19 side, and an optical sheet 15c arranged on the liquid crystal panel 11 side. Each of the diffusers 15a and 15b includes a transparent resin base material thicker than the optical sheet 15c and a large number of diffusing particles scattered in the base material. The diffusers 15a and 15b have functions of diffusing light that passes therethrough. The diffusers 15a and 15b having the same thickness are placed on top of each other. The optical sheet 15c is a thin sheet having a smaller thickness than that of the diffusers 15a and 15b. The optical sheet 15c includes three sheets placed on top of each other, more specifically, a diffuser sheet, a lens sheet and a reflection-type polarizing sheet arranged in this order from the diffuser 15a (15b) side (i.e., from the rear-surface side).

The first holding member 19 is arranged on outer edge portions of the chassis 14 and configured to support almost entire outer edge portions of the diffuser plates 15a and 15b from the chassis 14 side. As illustrated in FIG. 3, the first holding member 19 includes a pair of short-side first holding parts 19A and two different long-side first holding parts 19B and 19C. The short-side first holding parts 19A are arranged so as to extend along the respective short sides of the chassis 14. The long-side first holding parts 19B and 19C are arranged so as to extend along the respective short sides of the chassis 14. The parts of the first holding member 19 are configured differently according to mounting locations. The symbols 19A to 19C are used for referring to the parts of the first holding member 19 independently. To refer to the first holding member 19 as a whole, the numeral 19 without the letters is used.

As illustrated in FIGS. 4 and 5, the short-side first holding parts 19A have substantially same configurations. Each of them has a substantially L-shape cross section so as to extend along a surface of the support plate 14c and an inner surface of the side plate 14b. A part of each short-side first holding part 19 parallel to the support plate 14c receives the diffuser 15b in an inner area and a short-side second holding part 20A in an outer area. The short-side second holding part 20A will be explained later. The short-side first holding parts 19A cover substantially entire lengths of the support plates 14c and the side plates 14b on the short sides.

The long-side first holding parts 19B and 19C are configured differently. Specifically, the long-side first holding part 19B is arranged on the lower side in the vertical direction of the chassis 14 (the lower side in FIG. 3). As illustrated in FIG. 7, it is arranged so as to extend along the inner surface of the support plate 14c and a surface of the light guide plate 18 located on the display surface side (a surface opposite from the LED board 17 side). The light guide plate 18 is located adjacent to the support plate 14c. The first long-side holding part 19B has a function of pressing the adjacent light guide plate 18 from the display surface side. The long-side first holding part 19B receives the diffuser 15a that is located on the display surface side in the inner edge area, and a long-side second holding part 20B in the outer edge area. The long-side second holding part 20B will be explained later. The inner edge area of the long-side first holding part 19B has a stepped portion 19Ba formed so as to correspond to the shape of the outer edge area of the diffuser 15a that is located on the display surface side. Adjacent to the stepped portion 19Ba, recesses 19Bb for receiving protrusions 20Bc of the long-side second holding part 20B are formed in the long-side first holding part 19B on the outer side with respect to the stepped portions 19Ba. The long-side holding part 19B coves substantially entire lengths of the support plate 14c on the long side and non-luminous portions of the adjacent light guide plates 18 (a board mounting portion 30 and a light guide portion 32). The width of the long-side first holding part 19B is larger than those of the other first holding parts 19A and 19C by an area that covers the non-luminous portion.

The long-side first holding part 19C is arranged on the upper side of the chassis 14 (the upper side in FIG. 3). As illustrated in FIG. 8, the long-side first holding part 19C has a crank-like cross section. It is arranged along the inner surfaces of the support plate 14c, the side plate 14b and the bottom plate 14a. A diffuser support protrusion 19Ca is formed in an area of the long-side first holding part 19C parallel to the support plate 14c so as to protrude on the display surface side. The diffuser support protrusion 19Ca has an arch-shaped cross section. It is brought into contact with the diffuser 15b on the chassis 14 side from the chassis 14 side. A light guide plate support protrusion 19Cb is formed is an area of the long-side first holding part 19C parallel to the bottom plate 14a so as to protrude on the display surface side. The light guide plate support protrusion 19Cb has an arch-shaped cross section. It is brought into contact with the adjacent light guide plate 18 from the rear-surface side. The long-side first holding part 19C has functions of receiving the diffusers 15a and 15b (i.e., support functions) and light guide plate 18 (i.e., support functions). An area of the long-side holding part 19C parallel to the support plate 14c and inside with respect to the diffuser support protrusion 19Ca is brought into contact with the end portion of the light guide plate 18 from the rear-surface side. The light guide plate 18 is supported at two points: at the end portion with the support protrusion 19Ca and at the base portion with the light guide support protrusion 19Cb. The long-side first holding part 19C covers substantially entire areas of the support plate 14c and the side plate 14b on the long side. A projecting portion 19Cc rises from the outer edge of the long-side holding part 19C so as to face the end surfaces of the diffusers 15a and 15b.

As illustrated in FIG. 3, the second holding member 20 is arranged on outer edge areas of the chassis 14. A width of the second holding member 20 is smaller than a dimension of the corresponding sides of the chassis 14 and the diffusers 15a and 15b. Therefore, the second holding member 20 presses parts of the outer edge portion of the diffusers 15a. The second holding member 20 includes short-side second holding parts 20A arranged on the respective short-edge area of the chassis 14 and a plurality of long-side second holding parts 20B and 20C are arranged on each long-edge area. The parts of the second holding member 20 are configured differently according to mounting locations. The symbols 20A to 20C are used for referring to the parts of the second holding member 20 independently. To refer to the second holding member 20 as a whole, the numeral 20 without the letters is used.

The short-side second holding parts 20A are arranged around central portions of the respective short-edge areas of the chassis 14. They are placed on the outer-edge portions of the short-side first holding parts 19A and fixed with screws. As illustrated in FIG. 5, each short-side second holding part 20A has a holding tab 20Aa that projects inward from a body that is screwed. The diffuser 15a is pressed by edge areas of the holding tabs 20Aa from the front. The liquid crystal panel 11 is placed on the holding tabs 20Aa from the display surface side and held between the bezel 13 and the holding tabs 20Aa. Cushion materials for the liquid crystal panel 11 are arranged on surfaces of the holding tabs 20Aa.

The long-side second holding parts 20B and 20C are configured differently. The long-side second holding parts 20B is arranged on the lower side of the chassis 14 in the vertical direction (the lower side in FIG. 3). As illustrated in FIG. 3, three long-side second holding parts 20B are arranged at substantially equal intervals. One of them is arranged around the middle of the long side area of the chassis 14 on the lower side in FIG. 3 and the other two are arranged on either side of the one arranged in the middle. They are placed on the outer edge area of the long-side first holding part 19B and screwed. As illustrated in FIG. 7, each long-side holding part 20B has a holding tab 20Ba on the inner side similar to the short-side holding parts 20A. A surface of the holding tab 20Ba on the chassis 14 side presses the diffuser 15a. Surfaces on the display surface side receive the liquid crystal display panel 11 via cushion materials 20Bb. The long-side second holding parts 20B has widths larger than those of the other second holding parts 20A and 20C, which is similar to the long-side first holding parts 19B. Projections 20Bc for positioning the long-side second holding parts 20B to the long-side first holding parts 19B are formed on the surfaces of the long-side second holding parts 20B on the chassis 14 side.

The long-side second holding parts 20C are arranged on the upper side of the chassis 14 in the vertical direction (the upper side in FIG. 3). As illustrated in FIG. 3, two long-side second holding parts 20C are arranged in a long-edge area of the chassis 14 on the upper side in FIG. 3. They are directly placed on the support plate 14c of the chassis 14 and screwed. As illustrated in FIG. 8, each long-side second holding part 20C has a holding tab 20Ca on the inner side, similar to the short-side second holding parts 20A and the long-side second holing parts 20B. Surfaces of the holding tabs 20Ca on the chassis 14 side press the diffuser 15a and the surfaces on the display surface side receive the liquid crystal panel 11 via cushion materials 20Cb. Other cushion materials 20Cc are provided between the holding tabs 20Ca of the long-side second holding parts 20C and the bezel 13.

The heat sinks 21 are made of synthetic resin or metal having high thermal conductivity and formed in a sheet-like shape. As illustrated in FIGS. 5 and 7, the heat sinks 21 are arranged inside and outside the chassis 14, respectively. The heat sink 21 inside the chassis 14 is placed between the bottom plate 14a of the chassis 14 and the LED boards 17. It has cutouts for the components in some areas. The heat sink 21 outside the chassis 14 is arranged on the rear surface of the bottom plate 14a of the chassis 14.

As illustrated in FIG 10, the LEDs 16 are surface-mounted to the LED boards 17, that is, the LEDs 16 are surface-mount LEDs. Each LED 16 has a block-like overall shape that is long in the horizontal direction. The LEDs 16 are side emitting LEDs. A side surface of each LED 16 that stands upright from a mounting surface is a light emitting surface 16a. The mounting surface is placed against the LED board 17 (i.e., the bottom surface that is in contact with the LED board 17). A light axis LA of light emitted from the LED 16 is substantially parallel to the display surface 11a of the liquid crystal display panel 11 (the light exit surface 36 of the light guide plate 18) (see FIGS. 7 and 10). Specifically, the light axis LA of the light emitted from the LED 16 matches the short-side direction (the Y-axis direction) of the chassis 14, that is, the vertical direction. The light travels toward the upper side in the vertical direction (a travel direction of the outgoing light from the light exit surface 16a) (see FIGS. 3 and 7). The light emitted from the LED 16 thee-dimensionally radiates around the light axis LA in a specified angle range. The directivity thereof is higher than cold cathode tubes. Namely, angle distributions of the LED 16 shows a tendency that the emission intensity of the LED 16 is significantly high along the light axis LA and sharply decreases as the angle to the light axis LA increases. The longitudinal direction of the LED 16 matches the long-side direction of the chassis 14 (the X-axis direction).

The LED 16 includes a plurality of LED chips 16c mounted on a board 16b that is arranged on an opposite side from the light emitting surface 16a (the rear-surface side). The LED chips 16c are light emitting components. The LED 16 is housed in the housing 16d and an inner space of the housing 16d is closed with a resin member 16e. The LED 16 includes three different kinds of the LED chips 16c with different main emission wavelengths. Specifically, each LED chip 16c emits a single color of light of red (R), green (G) or blue (B). The LED chips 16c are arranged parallel to each other along the longitudinal direction of the LED 16. The housing 16d is formed in a drum-like shape that is long in the horizontal direction and in white that provides high light reflectivity. The rear surface of the board 16b is soldered to a land on the LED board 17.

Each LED board 17 is made of resin and the surfaces thereof (including a surface facing the light guide plate 18) are in white that provides high light reflectivity. As illustrated in FIG. 3, the LED board 17 is formed in a plate-like shape having a rectangular plan view. The LED board 17 has a long dimension smaller than the short dimension of the bottom plate 14a and thus it can partially cover the bottom plate 14a of the chassis 14. The LED boards 17 are in a plane arrangement in a grid pattern on the surface of the bottom plate 14a of the chassis 14. In FIG. 3, five along the long-side direction of the chassis 14 by five along the short-side direction and a total of 25 LED boards 17 are arranged parallel to each other. Wiring patterns that are metal films are formed on each LED board 17 and the LEDs 16 are mounted in predetermined locations on the LED board 17. The LED boards 17 are connected to an external control board (not shown). The control board is configured to feed currents for turning on the LEDs 16 and to perform driving control of the LEDs 16.

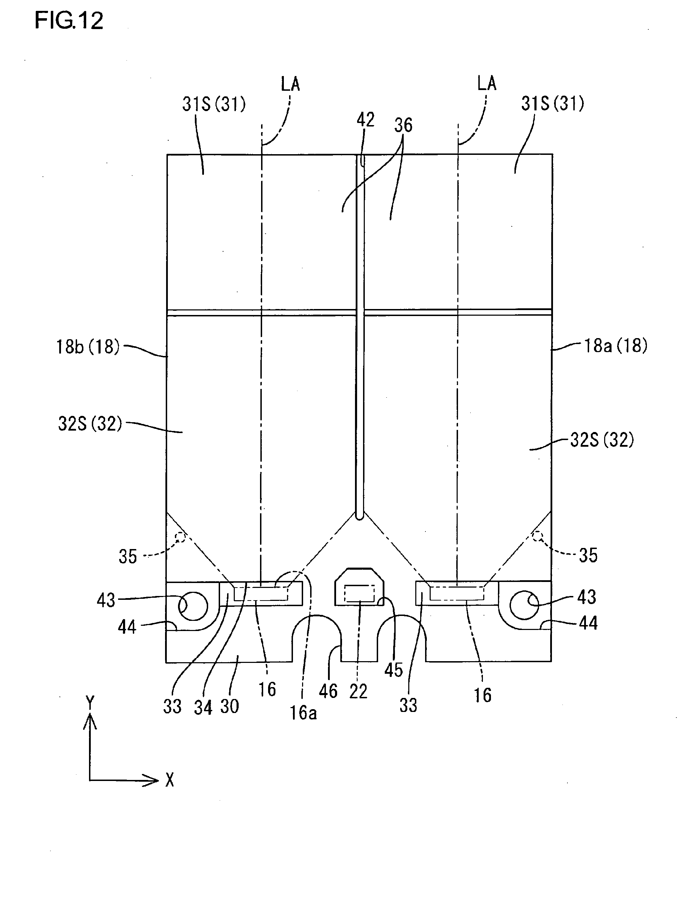

A number of LEDs 16 are arranged in a planar grid pattern on each LED board 17. The arrangement pitch of the LEDs 16 corresponds the arrangement pitch of the light guide plates 18, which will be explained later. Specifically, eight along the long-side direction of the LED board 17 by four along the short-side direction thereof and a total of 32 LEDs 16 are arranged parallel to each other on the LED board 17. Photo sensors 22 are also mounted on the respective LED boards 17. Light emitting conditions of the LEDs 16 are determined by the photo sensors 22 and thus feedback control can be performed on the LEDs 16 (see FIGS. 4 and 12). Each LED board 17 has mounting holes 17a for receiving the clips 23 for mounting the light guide plates 18 (see FIGS. 5 and 6). It also has positioning holes 17b for positioning the light guide plates 18 (see FIG. 10). The holes are formed in locations corresponding to mounting locations of the light guide plates 18.

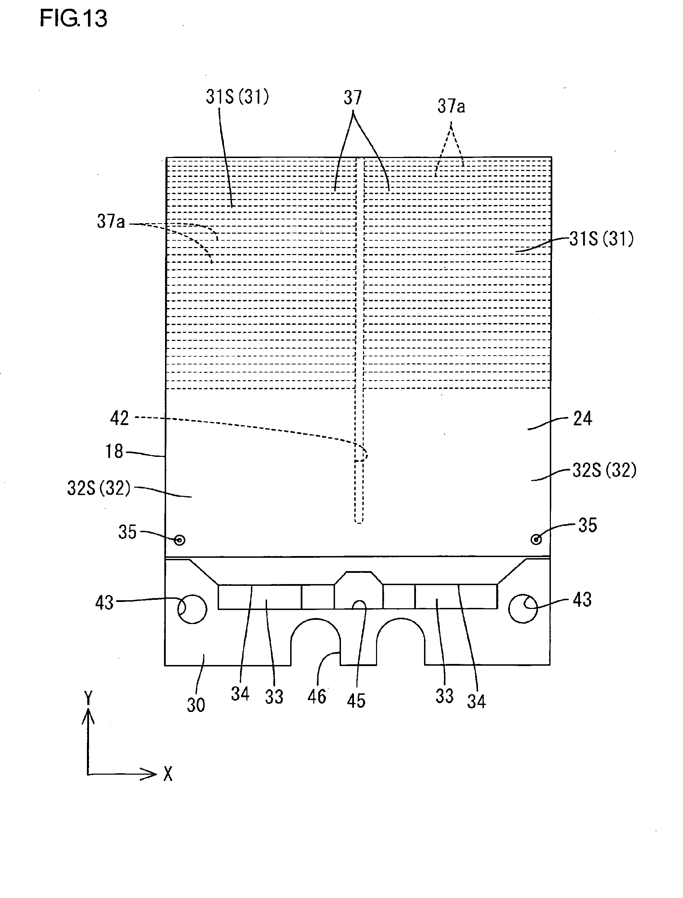

Each light guide plate 18 is made of substantially transparent (i.e., having high light transmission capability) synthetic resin (e.g. polycarbonate), a reflective index of which is significantly higher than that of air. As illustrated in FIGS. 7 to 9, the light guide plate 18 draws the light emitted from the LED 16 in the vertical direction (the Y-axis direction), transmit the light therethrough (in the planar direction of the panel (the X-Y plane)) and directs it toward the optical member 15 (in the Z direction). Namely, it converts point light to planar light and directs the light toward the liquid crystal display panel 10. As illustrated in FIG. 13, the light guide plate 18 has a plate-like shape having a rectangular overall plan view. The long-side direction of the light guide plate 18 is parallel to the light axis LA of the LED 16 (the light emitting direction) and the short-side direction of the chassis 14 (the Y-axis direction or the vertical direction). The short-side direction is parallel to the long-side direction of the chassis 14 (the X-axis direction or the horizontal direction). Next, a cross-sectional structure of the light guide plate 18 along the long-side direction will be explained in detail.

As illustrated in FIGS. 7 to 9, the light guide plate 18 has a board mounting portion 30 that is located at one of end portions of the long dimension (on the LED 16 side) and attached to the LED board 17. The other end portion of the long dimension is configured as a light exit portion 31 from which light exits toward the diffusers 15a and 15b. The middle portion between the board mounting portion 30 and the light exit portion 31 is configured as a light guide portion 32. The light guide portion 32 is configured to direct the light to the light exit portion 31 without losing most of the light. Namely, the board mounting portion 30, the light guide portion 32 and the light exit portion 31 are arranged in this order from the LED 16 side along the long-side direction of the light guide plate 18, that is, along the light axis LA (the light emitting direction) of the LED 16. The function of the light guide plate 18 varies along the light axis LA of the LED 16. The board mounting portion 30 and the light guide portion 32 are non-luminous portions. The light exit portion 31 is a luminous portion. In the following description, a point ahead in a direction from the board mounting portion 30 toward the light exit portion 31 (the light emitting direction of the LED 16 or the direction toward right in FIGS. 7 to 9) is referred to as the front. A point behind in a direction from the light exit portion 31 toward the board mounting portion 30 (the direction toward left in FIGS. 7 to 9) is referred to as the rear.

In front of the board mounting portion 30, an LED holding space 33 is formed so as to run through in the Z-axis direction. A surface of one of inner walls of the LED holding space 33, which faces the light emitting surface 16a of the LEC 16 (i.e., the front surface), is an entrance surface 34 through which light from the LED 16 enters. About entire peripheries of the light guide portion 32 are flat and smooth surfaces. Scattered reflections do not occur at interfaces (between the surfaces and external air layers). Incident angles of light that strikes the interfaces are larger than a critical angle and thus the light is totally reflected at multiple times while traveling through the light guide portion 32 and guided to the light exit portion 31. Therefore, the light is less likely to leak from the light guide portion 32 and reach other light guide plates 18.

The LED chips 16c of the LED 16 emits beams of light in respective RGB colors. Three different colors of the beams are mixed as the beams of light travel through the light guide portion 32 and turn into white. The white light is guided to the light exit portion 31. The positioning protrusion 35 protrudes toward the rear-surface side. It is located in an area of the light guide portion 32 close to the board mounting portion 30 (close to a rear end area). The light guide plate 18 is positioned with respect to the LED board 17 in the X-axis direction and the Y-axis direction when the protrusion 35 is inserted in the positioning hole 17b of the LED board 17.

As illustrated in FIG. 13, the LED 16 is arranged in the LED holding space 33 with entire peripheries thereof are separated from the inner walls of the LED holding space 33 (including the light entrance surface 34) by gaps in predetermined sizes. The gaps are provided for compensating for an error related to a mounting position of the light guide plate 18 with respect to the LED board 17. The gaps are required for allowing thermal expansion of the light guide plate 18, which may occur due to heat generated during lighting of the LED 16. By providing the gaps between the LED 16 and the walls of the LED holding space 33, the light guide plate 18 is less likely to touch the LED 16 and thus the LED 16 is protected from being damaged.

A surface of the light exit portion 31 which faces toward the display surface side is about an entire area of the surface opposite the diffuser 15b is a light exit surface 36. The light exit surface 36 is a substantially flat and smooth surface. It is substantially parallel to the plate surfaces of the diffusers 15a and 15b (or the display surface 11a of the liquid crystal display panel 11) and perpendicular to the light entrance surface 34. The surface of the light exit portion 31 on the chassis 14 side (the surface opposite from the light exit surface 36 or the surface facing the LED board 17) is processed so as to form microscopic asperities thereon. The surface with microscopic asperities is a scattering surface 37 that scatters light at the interface. The light that travels through the light guide plate 18 is scattered by the interface of the scattering surface 37. Namely, light beams strike the light exit surface 36 at the incident angles smaller than the critical angle and exit through the light exit surface 36. As illustrated in FIG. 13, the scattering surface 37 has a plurality lines of perforations 37a (light exit elements) that extend straight along the short-side direction of the light guide plate 18 and parallel to each other. The arrangement pitch (the arrangement interval) of the perforations 37a is larger on the rear-end side of the light exit portion 31 than on the front-end side and gradually decreases. Namely, the density of the perforations 37a of the scattering surface 37 is low on the rear-end side and that is high on the front side. The closer to the LED 16 the lower the density becomes, and the farther from the LED 16 the higher the density becomes. With this configuration, brightness in the area of the light exit portion 31 closer to the LED 16 is less likely to differ from brightness in the area of the light exit portion 31 father from the LED 16. As a result, the uniform in-plane brightness distribution can be achieved on the light exit surface 36. The scattering surface 37 is provided in the about entire area of the light exit portion 31. The entire area substantially overlaps the light exit surface 36 in the plan view.

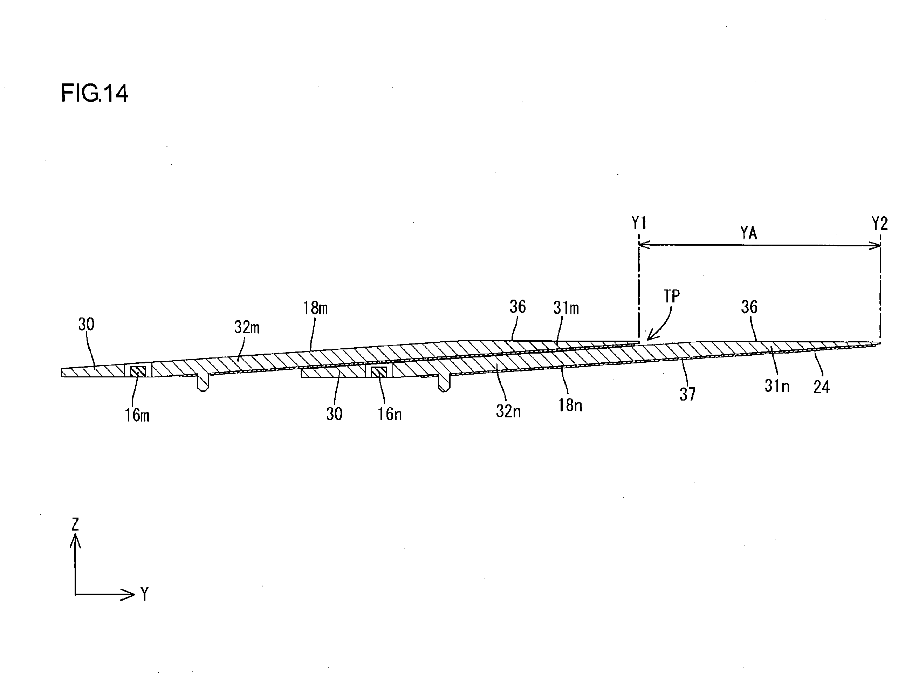

A reflection sheet 24 is placed on surfaces of the light exit portion 31 and the light guide portion 32 (including the scattering surface 37) on the rear-surface side (on the chassis 14 side). The reflection sheet 24 is configured to reflect light such that the light enters the light guide plate 18. The reflection sheet 24 is made of synthetic resin and the surface thereof is white that provides high light reflectivity. The reflection sheet 24 is disposed so as to cover about entire areas of the light exit portion 31 and the light guide portion 32 in the plan view (see FIG. 14). With the reflection sheet 24, the light that travels through the light guide plate 18 does not or is less likely to leak to the rear-surface side and the light that is scattered at the scattering surface 37 is effectively directed toward the light exit surface 36. The reflection sheet 24 is attached to the light guide plate 18 with adhesives at points in side edge areas that are less likely to interfere with light that travels through the light guide plate 18. The reflection sheet 24 has holes through which the positioning protrusions 35 are passed.

As illustrated in FIG. 10, the light guide plate 18 has flat surfaces 38 and 41 on the chassis 14 side (the surface opposite the LED board 17) and on the display surface side (the surface opposite the diffusers 15a and 15b, including the light exit surface 36), respectively. The light guide plate 18 also has sloped surfaces 39 and 40 on the chassis 14 side and on the display surface side, respectively. The flat surfaces 38 and 41 are parallel to the X-Y plane (or the display surface 11a). The sloped surfaces 39 and 40 are sloped with respect to the X-Y plane. Specifically, the surface of the board mounting portion 30 on the chassis 14 side is a mounting surface that is placed on the LED board 17. To make the mounting condition stable, the flat surface 38 (the surface parallel to the main board surface of the LED board 17) is provided. The surfaces of the light guide portion 32 and the light exit portion 31 on the chassis 14 side form a continuous sloped surface 39. The board mounting portion 30 of the light guide plate 18 is in contact with the LED board 17 and fixed. The light guide portion 32 and the light exit portion 31 are separated from the LED board 17, that is, they are not in contact with the LED board 17. The light guide plate 18 is held in a cantilever manner with the board mounting portion 30 on the rear side as an anchoring point (or a supporting point) and a front end as a free end.

The surfaces of entire parts of the board mounting portion 30 and the light guide portion 32 and a part of the light exit portion 31 close to the light guide portion 32 on the display surface side form the continuous sloped surface 40. The sloped surface 40 is sloped at about the same angle and parallel with respect to the sloped surface 39 on the chassis 14 side. Namely, the thickness of the light guide plate 18 is substantially constant in the entire light guide portion 32 and a part of the light exit portion 31 close to the light guide portion 32 (close to the LEE 16). The surface of the light exit portion 31 on the front side (away from the LED 16) on the display surface side is the flat surface 41. Namely, the light exit surface 36 includes the flat surface 41 and the sloped surface 40. Most part of the light exit surface 36 on the front side is the flat surface 41 and a part thereof on the light guide portion 31 side is the sloped surface 40. The thickness of the board mounting portion 30 decreases toward the rear end (as further away from the light guide portion 32), that is, the board mounting portion 30 has a tapered shape. A part of the light exit portion 31 adjacent to the light guide portion 32 has the sloped surface 40 on the display surface side and thus the thickness thereof is constant. A part of the light exit portion 31 located more to the front than the above part has the flat surface 41 on the display surface side. Therefore, the thickness gradually decreases toward the front end (as further away from the light guide portion 32), that is, the light exit portion 31 has a tapered shape. A long dimension (a dimension measuring in the Y-axis direction) of the flat surface 41 on the display surface side is smaller than that of the flat surface 38 on the chassis 14 side. The front-end portion of the light exit portion 31 has a thickness smaller than that of the rear end portion of the board mounting portion 30. The entire peripheries of the light guide plate 18 (including the side surfaces and the front end surface) are vertical surfaces that extend substantially vertical along the Z-axis direction.

As illustrated in FIGS. 12 and 13, the light guide plate 18 having the above-described cross-sectional structure includes a pair of the LED holding spaces 33 for holding the LEDs 16. The light guide plate 18 is configured to receive beams of light from two different LEDs 16 and guide them to the diffusers 15a and 15b in optically independent conditions. How light is guided will be explained along with planar arrangements of parts of the light guide plate 18.

The light guide plate 18 has a symmetric shape with a line that passes through the meddle of the short side (in the X-axis direction) as a line of symmetry. The LED holding spaces 33 of the board mounting portion 30 are arranged symmetrically a predetermined distance away from the middle of the short side (in the X-axis direction) of the light guide plate 18. Each LED holding space 33 is a through hole that runs through the light guide plate 18 along the Z-axis direction as described earlier. The sidewalls of the LED holding space 33 on either side of the LED 16 form a part of the board mounting portion 30 that is parallel to the LED board 17. This configuration contributes to stabilizing the mounting condition of the light guide plate 18 to the LED board 17. The LED holding space 33 is slightly larger than the overall size of the LED 16. Namely, the height (the dimension measuring in the Z-axis direction) and the width (the dimension measuring in the X-axis direction) are slightly larger than those of the LED 16. The surface area of the light entrance surface 34 is significantly larger than the light exit surface 16a. Therefore, the beams of light emitted radially from the LED 16 enter the light guide plate 18 without any loss.

At the middle of the light guide plate 18 in the short-side direction, a slit 42 is formed so as to divide the light guide portion 32 and the light exit portion 31 into right and left. The slit 42 runs through the light guide plate 18 in the thickness direction (the Z-axis direction) and toward the front along the Y-axis direction with a constant width. End surfaces of the light guide plate 18 which face the slit 42 form side edge surfaces of the divided light guide portion 32S and the divided light exit portion 31S. The surfaces are flat and smooth surfaces arranged substantially straight along the Z-axis direction. The beams of light passing through the light guide plate 18 all reflect off an interface between the end surfaces and the air layer of the slit 42. Therefore, the beams of light do not travel or mix together between the divided light guide portions 32S that faces each other via the slit 42 or between the divided light exit portions 31S that faces each other via the slit 42. Namely, the divided light guide portions 32S and the divided light exit portions 31A have optically independent configurations. The rear end of the slit 42 is slightly more to the front than the positioning protrusion 35 and more to the rear than a lighting area of each LED 16 (the area within an angular range with the light axis LA of the LED 16 as the center and indicated by alternate long and short dash lines in FIG. 13). With this configuration, the beams of light emitted from the LED 16 do not directly enter the adjacent divided light guide portion 32S that is not a target to be lit. The positioning protrusions 35 are symmetrically located on the outer end areas of the divided light guide portions 32S (the end portions away from the slit 42) more to the rear than the lighting areas of the respective LEDs 16. Therefore, the positioning protrusions 35 are less likely to be obstacles in optical paths. The slit 42 does not run to the board mounting portion 30. Therefore, the divided light guide portions 32 connect to each other and continue into the board mounting portion 30. This provides mechanical stability in mounting conditions. The light guide plate 18 includes two unit light guide plates 18a and 18b (corresponding to the divided light guide portion 32S and the divided light exit portion 31S). The unit light guide plates 18a and 18b are optically independent from each other and provided each for each LED 16. The unit light guide plates 18a and 18b are connected to each other together with the board mounting portion 30. This simplifies mounting of the light guide plate 18 to the LED board 17. The reflection sheet 24 is placed over the slit 42 (see FIG. 14).

Clip insertion holes 43 are formed in the side-end areas of the board mounting portion 30 (in the areas more to the outsides than the LED holding space 33). The clip mounting holes 43 are through holes provided for mounting the light guide plate 18 to the LED board 17. As illustrated in FIG. 6, each clip 23 includes a mounting plate 23a, an insertion post 23b and a pair of stoppers 23c. The mounting plate 23a is parallel to the board mounting portion 30. The insertion post 23b projects from the mounting plate 23a in the thickness direction (the Z-axis direction) of the board mounting portion 30. The stoppers 23c project from an end of the insertion post 23b so as to return toward the mounting plate 23a. The insertion post 23b of the clip 23 is inserted in the clip insertion hole 43 of the board mounting portion 30 and the mounting hole 17a of the LED board 17. The stoppers 23c of the clip 23 are held to the edge portions around the mounting hole 17a. As a result, the light guide plate 18 is mounted and fixed to the LED board 17. As illustrated in FIGS. 5 and 12, one kind of the clips 23 has a single insertion post 23b projecting from the mounting plate 23a and the other kind has two insertion posts 23b projecting from the mounting plate 23a. The first kind of the clips 23 are inserted in the clip insertion holes 43 located in the end areas inside the chassis 14. The other kind of the clips 23 are arranged so as to connect two light guide plates 18 that are parallel to each other and thus the two light guide plates 18 are collectively mountable. As illustrated in FIGS. 6 and 12, clip receiving recesses 44 for receiving the mounting plates 23a of the clips 23 are provided around the clip insertion holes 43. With the clip receiving recesses 44, the mounting plates 23a do not project from the board mounting portions 30 toward the front and thus spaces can be reduced, that is, the thickness of the backlight unit 12 can be reduced.

As illustrated in FIGS. 12 and 13, each board mounting portion 30 has a photo sensor holding space 45 between the LED holding spaces 33. The photo sensor holding space 45 is a through hole for holding the photo sensor 22 mounted on the LED board 17. A predetermined number of the photo sensors 22 are arranged irregularly, that is, between specific LEDs on the LED boards 17. Namely, some photo sensor holding spaces 45 of the light guide plates 18 in the chassis 14 do not hold the photo sensors 22. Each board mounting portion 30 has cutouts 46 in an area closer to the rear than the photo sensor holding spaces 33. The cutouts 46 are located symmetrically. Each cutout 46 runs completely through the board mounting portion 30 similar to the LED holding portion 33 but opens on the rear end. A screw (not shown) for fixing the LED board 17 to the chassis 14 is inserted in the cutout 46. Some of the cutouts are not used for light guide plates 18 in the chassis 14, as some photo sensor holding spaces 45 are not used.

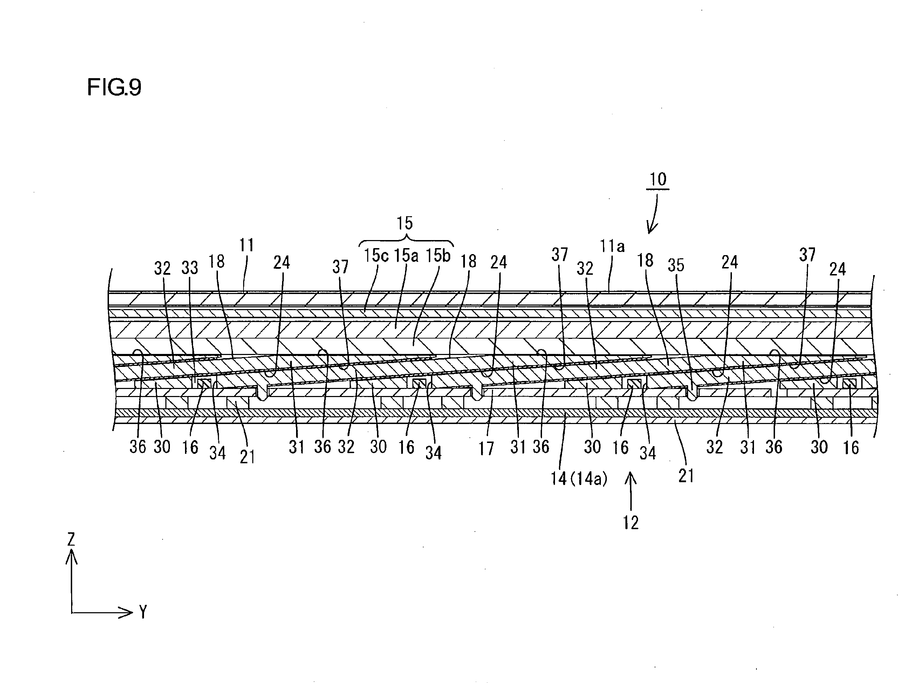

As described above, a large number of the light guide plates 18 are placed in a grid and in a planar arrangement within the area of the bottom plate 14a of the chassis 14. The arrangement of the light guide plates 18 will be explained in detail. First, the arrangement in the tandem-arrangement direction (the Y-axis direction) will be explained. As illustrated in FIG. 9, the light guide plates 18 are mounted such that the light guide portions 32 and the light exit portions 31 are separated from the LED boards 17. The light guide portion 32 and the light exit portion 31 of each light guide plate 18 overlap about entire areas of the board mounting portion 30 and the light guide portion 32 of the adjacently located light guide plate 18 on the front side (the upper side in the vertical direction) from the front side. Namely, the board mounting portion 30 and the light guide portion 32 of the light guide plate 18 on the front side overlap the light guide portion 32 and the light exit portion 31 of the light guide plate 18 on the rear side in the plan view. The board mounting portion 30 and the light guide portion 32, which are the non-luminous portion of the light guide plate 18, are covered with the light guide portion 32 and the light exit portion 31 of the adjacent light guide plate 18. Namely, the board mounting portion 30 and the light guide portion 32 are not bare on the diffuser 15b side and only the luminous portion, that is, the light exit surface 36 of the light exit portion 31 is bare. With this configuration, the light exit surfaces 36 of the light guide plates 18 are continuously arranged without gaps in the tandem-arrangement direction. About entire rear surfaces of the light guide portion 32 and the light exit portion 31 are covered with the reflection sheet 24. Therefore, even when light is reflected by the light entrance surface 34 and leak occurs, the leak light does not enter the adjacent light guide plate 18 on the rear side. The light guide portion 32 and the light exit portion 31 of the light guide plate 18 on the rear side (the front-surface side) is supported by the adjacent overlapping light guide plate 18 on the front side (the rear-surface side) from the chassis 14 side. The sloped surface 40 of the light guide plate 18 on the display surface side and the sloped surface 39 on the chassis 14 side have substantially same slope angles and are parallel to each other. Therefore, gaps are not created between the overlapping light guide plates 18 and the light guide plates 18 on the rear-surface side support the light guide plates 18 on the chassis 14 side without rattling. Only front side parts of the light guide portions 32 of the light guide plates 18 on the rear side cover the board mounting portions 30 of the light guide plates 18 on the front side. The rear-side parts face the LED boards 17.

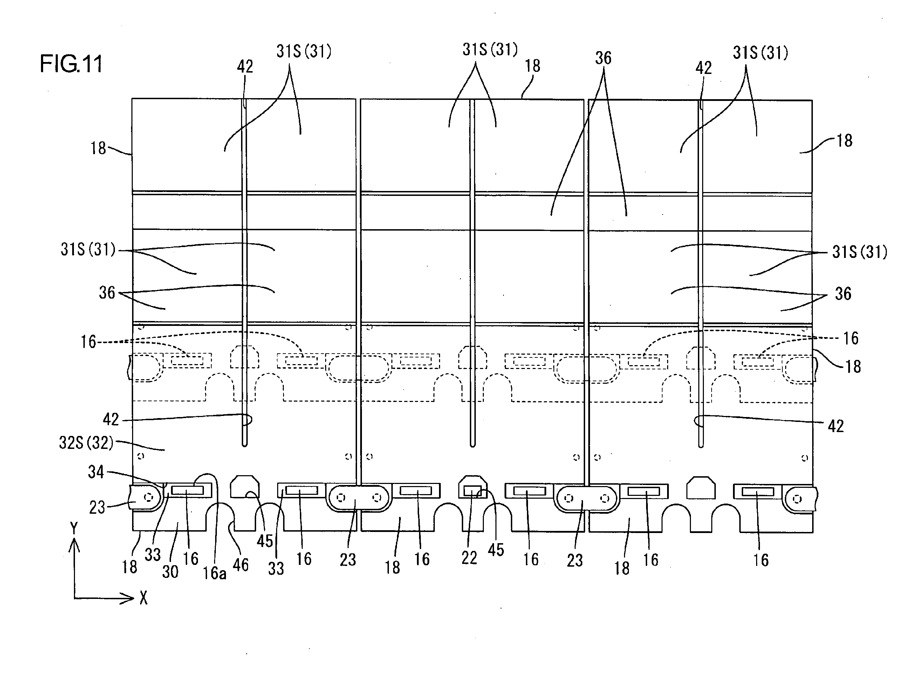

The arrangement in a direction perpendicular to the tandem-arrangement direction (the X-axis direction) is illustrated in FIGS. 5 and 11. The light guide plates 18 do not overlap each other in the plan view. They are arranged parallel to each other with predetermined gaps therebetween. With the gaps, air layers are provided between the light guide plates 18 adjacent to each other in the X-axis direction. Therefore, the beams of light does not travel or mix between the light guide plates 18 adjacent to each other in the X-axis direction and thus the light guide plates 18 are optically independent from each other. The size of the gaps between the light guide plates 18 is equal to or smaller than that of the slit 42.

As illustrated in FIGS. 3 and 11, a large number of the light guide plates 18 are arranged in the planar arrangement inside the chassis 14. The light exit surface of backlight unit 12 is formed with a number of the divided light exit portions 31S. As described above, the divided light guide portions 32s and the divided light exit portions 31S of the light guide plates 18 are optically independent from each other. Turning on and off of the LEDs 16 are controlled independently. The outgoing light (amounts of light, emission or non-emission of light) from the divided light exit portion 31S can be controlled independently. The driving of the backlight unit 12 can be controlled using an area active technology that provides control of outgoing light for each area. This significantly improves contrast that is very important for display performance of the liquid crystal display device 10.

In the backlight unit 12 including such LEDs 16 and light guide plates 18, the outgoing light from the light exit surface 16a when the LED 16 is turned on passes through the gap between the LED 16 and the light entrance surface 34 and then through the light entrance surface 34. The light enters the light guide plate 18 via the light entrance surface 34 is totally reflected by the interface between the light guide portion 32 and the external space and guided to the light exit portion 31. The light does not exit to the external space while traveling through the light guide portion 32 and thus no leak light is produced. The light that reaches the light exit portion 31 is scattered by the scattering surface 37 formed on the surface opposite from the light exit surface 36, and reflected by the reflection sheet 24 on the rear surface. As a result, the light is guided to the light exit surface 36. Some beams of the light scattered by the scattering surface 37 and reflected by the reflection sheet 24 strike the light exit surface 36 at angles smaller than the critical angle. The beams of light exit the light guide plate 18 through the light exit surface 36 and travel to the external space. The beams of light that strike the light exit surface 36 at angles larger than the critical angle are totally reflected by the light exit surface 36 and scattered by the scattering surface 37. The beams of light are repeatedly reflected and scattered, and then exit the light exit surface 36. The light that exits each light guide plate 18 is scattered. The beams of scattered light are aligned so as to evenly spread within the entire area of the light exit surface 36 of the backlight unit 12 as they pass through the diffusers 15a and 15b and the optical sheet 15c. Then, they form substantially planar light and illuminate the liquid crystal panel 11.

With such outgoing light, as illustrated in FIG. 14, a uniform amount of light exits toward the liquid crystal panel 11 through the light emitting area YA corresponding to the light exit surface 36 (an area of the light guide plate 18n between the front end Y1 of the light guide plate 18m on the rear side and the front end Y2 of the light guide plate 18n). In FIG. 14, the different LEDs 16 are referred to as the first light source 16n and the second light source 16m, and the different light guide plates 18 are referred to as the first light guide plate 18n and the second light guide plate 18m. Moreover, the light guide portion 32 and the light exit portion 31 on the first light guide plate 18n side are referred to as the light guide portion 32n and the light exit portion 31n, respectively. The light guide portion 32 and the light exit portion 31 on the second light guide plate 18m side are referred to as the light guide portion 32m and the light exit portion 31m, respectively. As described earlier, the surface of the light exit portion 31 on the chassis 14 side (the surface opposite from the light exit surface 36 or the surface facing the LED board 17) is processed so as to form microscopic asperities thereon. The light that travels through the light guide plate 18 is scattered by the interface of the scattering surface 37. Namely, light beams strike the light exit surface 36 at the incident angles smaller than the critical angle (the light beams that breaks the total reflection) and exit from the light exit surface 36 toward the liquid crystal panel 11.

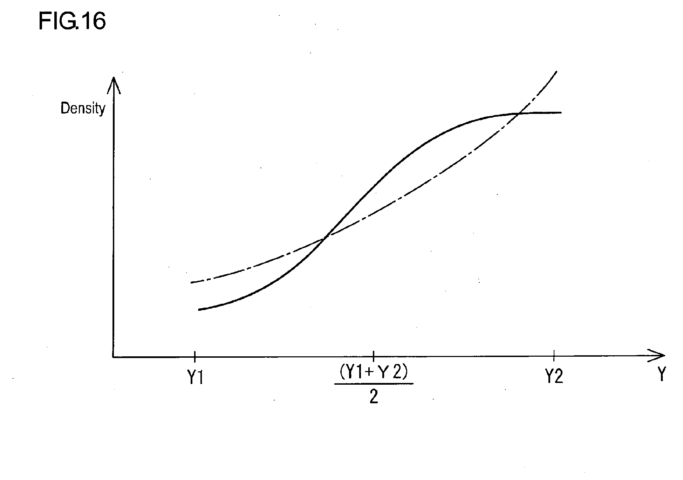

As described earlier, the perforations 37a are formed in the scattering surface 37 such that a number of them are arranged parallel to each other at predetermined intervals, each of which extend straight along the short-side direction of the light guide plate 18 (see FIG. 13). An array pitch (an array interval) of the perforations 37a is larger on the rear end side of the light exit portion 31 and becomes smaller toward the front end (the distal end). A density of the perforations 37a in the scattering surface 37 (the number of the perforations 37a per unit area in the Y-axis direction) becomes lower on the rear-end side (close to the LED 16) and higher on the front-end side (away from the LED 16). The density distribution of the perforations 37a is illustrated in FIG. 16.

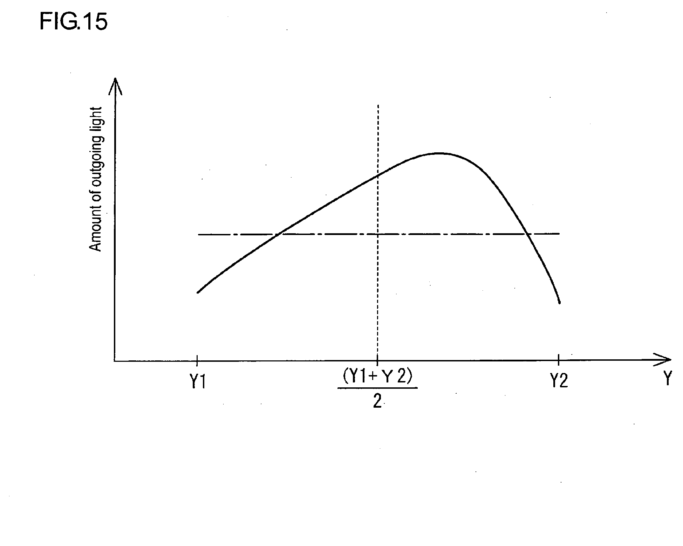

In FIG. 16, a solid line illustrates the density distribution curve related to the perforations 37a formed in each light guide plate 18 used in this embodiment. Alternate long and short dash lines illustrate a theoretical density distribution curve related to a single light guide plate that has perforations formed such that an amount of outgoing light is constant along the Y-axis direction and used alone (i.e., light is emitted from a single LED and output through a single light guide plate). Regarding such a light guide plate having the perforations formed such that the amount of outgoing light is constant along the Y-axis direction (indicated with alternate long and short dash lines in FIG. 15), the density of the perforations gradually increase from the Y1 side showing gradational change as illustrated in FIG. 16.

When the light guide plates 18 having perforations, the density distribution of which shows simple gradation change indicated by the alternate long and short lines in FIG. 16, are placed in the tandem arrangement, the amount of outgoing light from the light exit area YA of the light guide plate 18n in FIG. 14 is significantly large on the Y1 side closer to the front end of the light guide plate 18m. This may be due to light that exit from the front end surface (the light exit surface) TP of the light guide plate 18m on the rear side or light that leak through a small gap between the light guide plates 18n and 18m. If the amount of outgoing light is too large, brightness on the light exit surface 36 may be uneven. When the density distribution of which shows simple gradation change indicated by the alternate long and short lines in FIG. 16, the amount of outgoing light on the Y2 side close to the front end of the light guide plate 18n also becomes too large due to light that leak from the front end Y2 of the light guide plate 18n. As a result, the brightness on the light exit surface 36 may be uneven. In this embodiment, the density distribution is slightly lower than the theoretical density distribution (indicated with the alternate long and short lines in FIG. 16) on the rear side (i.e., on the Y1 side closer to the front end of the light guide plate 18m on the rear side) as illustrated the solid line in FIG. 16. The density distribution is higher than the theoretical density distribution in the middle area ((Y1 + Y2)/2) and is slightly lower than the theoretical density distribution on the front side (i.e., on the Y2 side close to the front end of the light guide plate 18n). Therefore, the each light guide plate 18 emits the amount of light illustrated with the solid line in FIG. 15.

Each light guide plate 18 of this embodiment is configured such that the maximum amount of light exits an area of the light exit portion 31 located more to the front end than the middle of the area adjacent to the light guide portion 32 to the front end of the light exit portion 31. Light including leak light from the front end surface TP of the light guide plate 18m on the rear side and leak light from the front end Y2 exits the light guide plate 18n in the tandem arrangement. Therefore, uniform in-plane brightness distribution can be achieved in the light exit surface 36.

As illustrated in FIG. 14, the backlight unit 12 of this embodiment includes the secondary light sources (the unit light emitters) 200, each of which is constructed of the LED 16 and the light guide plate 18. The first light exit portion 31n of the first light guide plate 18n and the second light exit portion 31m of the second guide plate 18m are adjacent to each other on the plane. The second light exit portion 31m of the second light guide plate 18m is placed over the first light guide portion 32n of the first light guide plate 18. As a result, the first light exit portion 31n of the first light guide plate 18n and the second light exit portion 31m of the second light guide plate 18m are arranged adjacent to each other in the plane. In this case, light leaks from the second light exit portion 31m placed over the first light guide portion 32n to toward the first light exit portion 31. Therefore, the distribution of the amount of outgoing light from the first light exit portion 31n needs to be controlled in consideration of the leak light. One of the causes of the leak light is that a large or small area of the surface from which light exits (i.e., the light exit surface) is formed at the front end area of the second light exit portion 31m. Furthermore, light leaks through a gap between the first light guide portion 32n and the second light exit portion 31m even when the second light exit portion 31m is arranged over the first light guide portion 32n. Still furthermore, light leaks from (the light exit surface of) the front-end portion of the second light guide plate 18m when the second light guide plate 18m is configured such that the maximum amount of light exits an area of the light exit portion 31m located in the middle of the light exit portion 31m. Therefore, each light guide plate 18 of this embodiment is designed so as to have the following light emitting characteristics. When the distribution of the amount of outgoing light from the light exit portion 31 of each light guide plate 18 is measured, the measurement shows that the maximum amount of light exits an area of the light exit portion 31 located more to the front end than the middle of the area adjacent to the light guide portion 32 to the front end of the light exit portion 31. With this configuration, brightness distribution in the first light exit portion 31n becomes uniform because of leak light from the second light exit portion 31m side. The light guide plate 18n is designed such that the maximum amount of light exits an area of the light exit portion 31 located more to the front end than the middle of the area adjacent to the light guide portion 32 to the front end of the light exit portion 31. Namely, leak light from the second light exit portion 31m side (the first light guide portion 32n side) is added to the incident light of the first light guide plate 18n. Therefore, overall brightness of the first light exit portion 31n is uniform.

The backlight unit 12 of this embodiment is provided in a small thickness and with uniform brightness. Therefore, the liquid crystal display 10 and the television receiver TV are provided in small thicknesses.

### <Other embodiments>

The present invention is not limited to the above embodiments explained in the above description. The following embodiments may be included in the technical scope of the present invention, for example.

(1) In the above embodiment, the distribution of the amount of light that exits the light exit portion through the light exit surface is controlled with the scattering surface. However, the distribution may be controlled with the reflection sheet having an uneven surface. In the above embodiment, the perforations are formed in the surface of each light exit portion opposite from the light exit surface as light exit elements. However, the surface may be formed unevenly or with dots for the light exit elements for releasing light from the light exit portion.

(2) In the above embodiment, a single slit is formed in each light guide plate to divide the light exit portion and the light guide portion (the light entrance surface) into two, respectively. However, two slits may be formed in each light guide plate so as to form more than two divided light exit portions and more than two divided light guide portions (light entrance surfaces). With this configuration, more than two LEDs are collectively covered with a single light guide plate and this makes assembly of the backlight unit easier.

(3) In the above embodiment, each light guide plate has a slit that divides the light exit portion and the light guide portion into two, respectively so as to collectively covers multiple LEDs. However, each light guide plate may be provided without a slit and covers a single LED (i.e., it has a single light entrance surface). With this configuration, light from the adjacent LED that is not an object to be covered with that specific light guide plate does not enter the light guide plate. Namely, optical independence of each light guide plate is maintained.

(4) In the above embodiment, each light guide plate has a rectangular plan view. However, each light guide plate may have a square plan view. Lengths, widths, thicknesses and outlines of each board mounting portion, light guide portion and light exit portion can be flexibly defined.

(5) In the above embodiment, the LEDs and the light guide plates are two-dimensionally arranged parallel to each other inside the chassis. However, they may be one-dimensionally arranged parallel to each other. Specifically, the LEDs and the light guide plates are arranged parallel to each other in only in the vertical direction, or they are arranged parallel to each other only in the horizontal direction.

(6) In the above embodiment, each LED holding space has an opening on the rear side and the corresponding light entrance surface is exposed to the external space on the rear side. However, the LED holding space may be formed as a through hole that runs in the thickness direction of the light guide plate and has a closed-end rim and the light entrance surface may not be exposed to the external space on the rear side.

(7) In the above embodiment, each LED includes three different LED chips configured to emit respective colors of RGB. However, LEDs each including a single LED chip configured to emit a single color of blue or violet and each configured to emit white light using fluorescent material may be used.

(8) In the above embodiment, each LED includes three different LED chips configured to emit respective colors of RGB. However, LEDs each including three different LED chips configured to emit respective colors of cyan (C), magenta (M) and yellow (Y) or white LEDs may be used.

(9) In the above embodiment, the LEDs are used as point light sources. However, point light sources other than LEDs can be used. Furthermore, the point light sources are used as light sources in the above embodiment. However, linear light sources such as cold cathode tubes and hot cathode tubes may be used.

(10) In the above embodiment, TFTs are used as switching components of the liquid crystal display device. However, the technology described the above can be applied to liquid crystal display devices including switching components other than TFTs (e.g., thin film diode (TFD)). Moreover, the technology can be applied to not only color liquid crystal display devices but also black-and-white liquid crystal display devices. Furthermore, the liquid crystal display device including the liquid crystal panel as a display component is used in the above embodiment. The technology can be applied to display devices including other types of display components.

## Claims

1. A lighting device comprising:
a plurality of light sources; and
a plurality of light guide members, each including a light exit portion through which light from corresponding one of the light sources exits and a light guide portion configured to guide the light from the light source to the light exit portion, wherein:
the light sources include a first light source and a second light source;
the light guide members include a first light guide member and a second light guide member;
the first light guide member includes a first light exit portion through which light from the first light source exits and the first light guide portion configured to guide the light from the first light source to the first light exit portion;
the second light guide member includes a second light exit portion through which light from the second light source exits and the second light guide portion configured to guide the light from the second light source to the second light exit portion;
the second light exit portion of the second light guide member is arranged over the first light guide portion of the first light guide member such that the first light exit portion of the first light guide member and the second light exit portion of the second light guide member are arranged adjacent to each other in a plane;
each of the light guide members is configured such that a maximum amount of light exits an area of the light exit portion located more to a front end than a middle of an area between an end of the light exit portion located adjacent to the light guide portion and the front end of the light exit portion.

2. The lighting device according to claim 1, wherein:
each of the light guide members has a light scattering portion configured to scatter light, the light scattering portion being formed on a surface opposite from a light exit surface of the light exit portion; and
the light scattering portion is a factor used to determine a distribution of an amount of outgoing light from the light exit portion.

3. The lighting device according to claim 2, wherein the light scattering portion is configured such that a degree of light scattering in the light exit portion is lower on a light guide portion side than on a front-end side and gradually increases.

4. The lighting device according to any one of claims 2 and 3, wherein:
the light scattering portion includes light exit elements formed in a surface of the light exit portion opposite from the light exit surface;
a density of the light exit elements in the light exit portion is lower on a light guide portion side than a front-end side and gradually increases.

5. The lighting device according to any one of claims 1 to 4, wherein the light exit portion of each light guide member has a light exit surface at an end surface opposite from the light guide portion.

6. The lighting device according to any one of claims 1 to 5, wherein:
the light sources and the light guide members form secondary light sources; and
the secondary light sources are two-dimensionally arranged in a plane:

7. The lighting device according to any one of claims 1 to 6, wherein:
each of the light sources includes a plurality of unit light sources configured to emit light in different colors; and
each of the light source is configured to produce white light by mixing the different colors of light emitted from the unit light sources.

8. The lighting device according to any one of claims 1 to 7, wherein the light sources are light emitting diodes.

9. A display device comprising:
the lighting device according to any one of claims 1 to 8; and
a display panel configured to provide display using light from the lighting device.

10. The display device according to claim 9, wherein the display panel is a liquid crystal panel including liquid crystals sealed between a pair of substrates.

11. A television receiver comprising the display device according to any one of claims 9 and 10.
